# FASCICULE DE BREVET EUROPEEN

(11) **EP 1 193 089 B1**
(45) Date de publication et mention de la délivrance du brevet: **23.05.2007**
(21) Numéro de dépôt: 01402514.2
(22) Date de dépôt: 28.09.2001
(51) Int. Cl.: B60J 5/04

(54) **Portière latérale de véhicule, à deux panneaux**
Seitentür für ein Kraftfahrzeug in zwei Teilen
Side door of vehicle in two panels

(30) Priorité: 28.09.2000 FR 0012368
(43) Date de publication de la demande: 03.04.2002
(73) Titulaire: Société Européenne de Brevets Automobiles - SEBA, 75011 Paris (FR)
(72) Inventeur: Queveau, Gérard, 79140 Le Pin (FR); Guillez, Jean-Marc, 79140 Cirieres (FR)
(74) Mandataire: Geismar, Thierry

(56) Documents cités:
- DE-A- 4 330 583
- FR-A- 894 788
- FR-A- 1 096 788
- US-A- 2 993 730

## Description

La présente invention concerne une portière latérale à deux panneaux pour véhicule.

Habituellement, les véhicules automobiles du type berline comportent deux sièges avant et deux sièges (ou banquette) arrière. Il est prévu, de chaque côté du véhicule une portière avant et une portière arrière permettant d'accéder respectivement à l'avant et à l'arrière.

Certaines berlines du type ci-dessus et les coupés à quatre places, ne présentent, de chaque côté qu'une seule portière.

Pour permettre l'accès aux places arrières, la longueur des portières est plus importante que dans le cas des berlines quatre places et il est nécessaire de basculer vers l'avant, le siège avant pour pouvoir accéder aux places arrières.

Dans le cas des coupés ou autres véhicules de grande longueur, la longueur de la portière devient excessive et gênante, notamment lorsque l'on stationne la voiture très près d'une autre voiture, d'un mur ou autre obstacle.

En effet, dans ce cas, compte-tenu de la longueur de la portière, celle-ci ne peut s'ouvrir que suivant un faible angle d'ouverture et il devient alors très difficile, voir impossible à un passager de sortir du véhicule.

Le but de la présente invention est de remédier aux inconvénients ci-dessus.

Suivant l'invention, la portière latérale pour véhicule comprend un panneau avant et un panneau arrière, le panneau avant étant fixé de façon articulée à la carrosserie du véhicule suivant un premier axe de pivotement vertical et le panneau arrière étant relié au panneau avant par un second axe de pivotement vertical, les deux panneaux étant en outre reliés l'un à l'autre par des moyens pour guider le déplacement des deux panneaux entre une position de fermeture dans laquelle les deux panneaux sont situés dans le prolongement l'un de l'autre, et une position d'ouverture dans laquelle le panneau avant présente un angle d'ouverture maximale plus important que l'angle d'ouverture maximale du panneau arrière, ce dernier angle étant suffisant pour permettre à une personne d'accéder à l'intérieur du véhicule, lesdits moyens pour guider le déplacement des deux panneaux, comprenant ledit second axe de pivotement vertical et un troisième axe de pivotement vertical, les deux axes étant solidaires du bord du panneau arrière adjacent au panneau avant, le premier axe de pivotement vertical étant solidaire du bord du panneau avant adjacent à la carrosserie, étant relié au second axe et étant relié à un quatrième axe de pivotement vertical; le quatrième axe étant libre par rapport au panneau avant, étant fixe par rapport à la carrosserie et étant relié par une biellette au troisième axe, les quatre axes ci-dessus formant un quadrilatère déformable.

Une telle portière est par exemple connue du document FR-A-1 096 788. Selon l'invention, la portière est caractérisée en ce que les deux bords adjacents des deux panneaux définissent entre eux, en position de fermeture, un espace de section en Vévasé vers l'intérieur du véhicule, cet espace étant réduit à une fente à bords sensiblement parallèles lorsque les deux panneaux sont en position d'ouverture maximale.

La portière selon l'invention peut ainsi avoir une longueur relativement longue, sans présenter un débattement latéral excessif ou gêner l'entrée et la sortie des passagers et le système de guidage ci-dessus à quadrilatère déformable permet, lors de l'ouverture de la portière, d'obtenir que l'angle d'ouverture du panneau avant progresse plus rapidement que celui du panneau arrière.

D'autres particularités et avantages de l'invention apparaîtront encore dans la description ci-après :
- la figure 1 est une vue en coupe longitudinale partielle d'un véhicule équipé d'une portière latérale selon l'invention,
- la figure 2 est une vue en coupe suivant le plan II - II de la figure 1,
- la figure 3 est une vue en coupe suivant le plan III de la figure 1,
- la figure 4 est une vue schématique de la portière, celle-ci comportant un cadre et un système de verrouillage,
- la figure 5 est une vue analogue à la figure 4, la portière ne comportant pas de cadre.

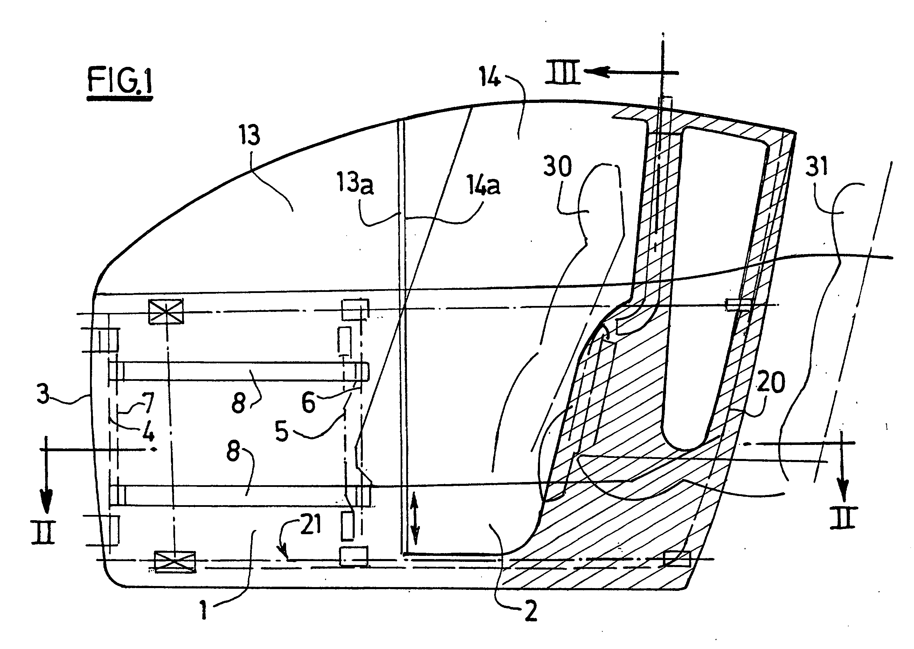

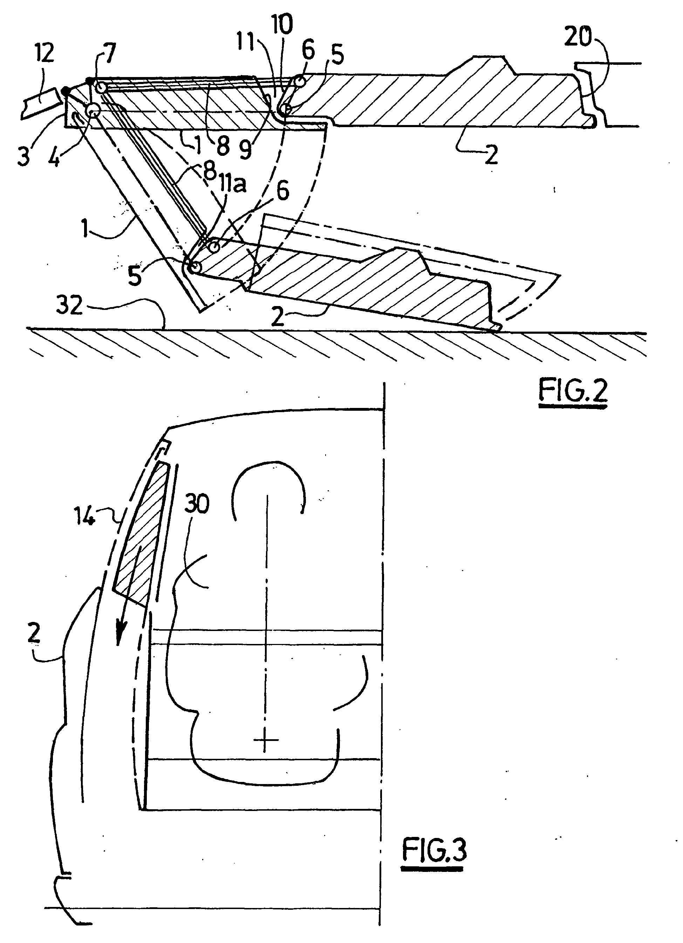

La portière latérale du véhicule représenté sur les figures 1 et 2 comprend un panneau avant (1) et un panneau arrière (2). Le panneau avant (1) est fixé de façon articulée à la carrosserie (3) du véhicule suivant un premier axe (4) de pivotement vertical et le panneau arrière (2) est relié au panneau avant (1) par un axe (5) de pivotement vertical.

Les deux panneaux (1, 2) sont en outre reliés l'un à l'autre par des moyens pour guider le déplacement des deux panneaux (1,2) entre une position de fermeture (voir haut de la figure 2) dans laquelle les deux panneaux (1, 2) sont situés dans le prolongement l'un de l'autre et une position d'ouverture (voir bas de la figure 2) dans laquelle le panneau avant (1) présente un angle d'ouverture maximale plus important que l'angle d'ouverture maximale du panneau arrière (2), ce dernier angle étant suffisant pour permettre à une personne d'accéder à l'intérieur du véhicule.

Les moyens pour guider le déplacement des deux panneaux (1, 2), comprennent (voir figure 2) deux axes (5, 6) de pivotement verticaux solidaires du bord du panneau arrière (2) adjacent au panneau avant (1), un axe (4) de pivotement vertical solidaire du bord du panneau avant (1) adjacent à la carrosserie (2), relié à l'axe (5) de pivotement du panneau arrière (2), et relié à un axe (7) de pivotement vertical libre par rapport au panneau avant (1) et relié par une biellette (8) à l'autre axe (6) de pivotement du bord du panneau arrière (2). Les quatre axes (4, 5, 6, 7) ci-dessus forment un quadrilatère déformable.

On voit d'autre part sur la figure (2) que les deux bords adjacents (9, 10) des deux panneaux (1, 2) définissent entre eux, en position de fermeture, un espace (11) de section en V évasé vers l'intérieur du véhicule.

Cet espace est réduit à une fente (11a) à bords sensiblement parallèles lorsque les deux panneaux (1, 2) sont en position d'ouverture maximale.

L'ouverture de la portière peut être assistée par un vérin (12), un moteur ou analogue.

Comme on le voit sur la figure 1, chaque panneau (1, 2) porte une vitre (13, 14) coulissante entre une position de fermeture et d'ouverture, les bords verticaux adjacents (13a, 14a) des deux vitres (13, 14) étant sensiblement jointifs en position de fermeture.

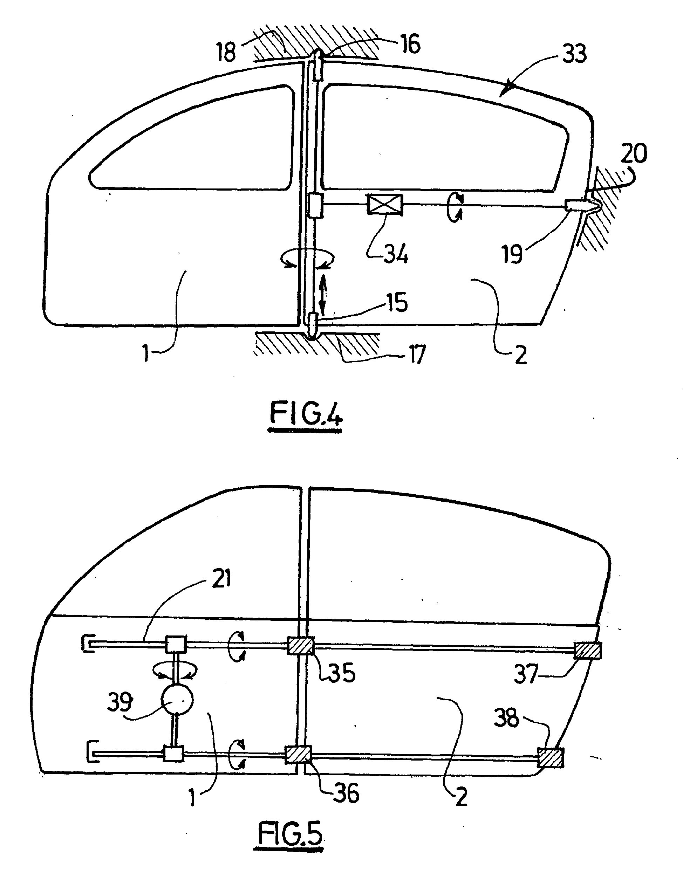

Comme également indiqué sur la figure 4, la portière comporte un cadre (33) et est équipée de deux verrous (15, 16) situés à proximité de la jonction entre les deux panneaux (1, 2), aptes à verrouiller ceux-ci, respectivement au bord inférieur (17) et au bord supérieur (18) de la carrosserie.

La portière comporte en outre, un verrou (19) pour verrouiller le bord arrière (20) du panneau arrière (2) à la carrosserie.

Les verrous (15, 16 et 19) peuvent être commandés par un moteur (34) ou par une commande manuelle.

La figure 1 montre que la portière selon l'invention, présente une longueur suffisante pour équiper un véhicule automobile ayant deux sièges avant (30) et deux sièges (ou une banquette) arrière (31), pour permettre l'accès à l'arrière sans qu'il soit nécessaire de basculer vers l'avant les sièges avant.

Bien entendu, la portière selon l'invention, peut s'appliquer à tout type de véhicule (coupé, berline, pick-up, camionnette, etc...) quelque soit le nombre de sièges

Dans tous les cas, la portière selon l'invention, facilite l'accès et la sortie du véhicule lorsque celui-ci est stationné à proximité d'un mur (32), comme montré sur la figure 2, d'un autre véhicule ou d'un quelconque obstacle réduisant l'angle d'ouverture de la portière.

Dans le cas de la portière sans cadre, illustrée par la figure 5, les verrous (35, 36, 37, 38) assurant le verrouillage des bords adjacents des deux panneaux (1, 2) et du bord arrière du panneau (2) à la carrosserie sont commandés par un système de commande centralisée, qui comprend un moteur 39 coopérant avec des tringles (21) en liaison avec les verrous.

Ce système peut être du genre de celui décrit dans le brevet français No 2791007 au nom de la demanderesse.

## Revendications

1. Portière latérale pour véhicule comprenant un panneau avant (1) et un panneau arrière (2), le panneau avant (1) étant fixé de façon articulée à la carrosserie (3) du véhicule suivant un premier axe (4) de pivotement vertical et le panneau arrière (2) étant relié au panneau avant (1) par un second axe (5) de pivotement vertical, les deux panneaux (1, 2) étant en outre reliés l'un à l'autre par des moyens pour guider le déplacement des deux panneaux (1, 2) entre une position de fermeture dans laquelle les deux panneaux (1, 2) sont situés dans le prolongement l'un de l'autre et une position d'ouverture dans laquelle le panneau avant (1) présente un angle d'ouverture maximale plus important que l'angle d'ouverture maximale du panneau arrière (2), ce dernier angle étant suffisant pour permettre à une personne d'accéder à l'intérieur du véhicule, lesdits moyens pour guider le déplacement des deux panneaux (1,2) comprenant:
- ledit second axe (5) de pivotement vertical et un troisième axe (6) de pivotement vertical, les deux axes (5,6) étant solidaires du bord du panneau arrière (2) adjacent au panneau avant (1);
- le premier axe (4) de pivotement vertical étant solidaire du bord du panneau avant (1) adjacent à la carrosserie (3), étant relié au second axe (5) et étant relié à un quatrième axe (7) de pivotement vertical;
- le quatrième axe (7) étant libre par rapport au panneau avant (1), étant fixe par rapport à la carrosserie (3) du véhicule et étant relié par une biellette (8) au troisième axe (6).
- les quatre axes (4, 5, 6, 7) ci-dessus formant un quadrilatère déformable ;
ladite portière étant **caractérisée en ce que** les deux bords adjacents (9, 10) des deux panneaux (1, 2) définissent entre eux, en position de fermeture, un espace (11) de section en V évasé vers l'intérieur du véhicule, cet espace (11) étant réduit à une fente (11a) à bords sensiblement parallèles lorsque les deux panneaux (1, 2) sont en position d'ouverture maximale.

2. Portière conforme à la revendication 1, **caractérisée en ce que** l'ouverture de la portière est assistée par un vérin (12) ou un moteur.

3. Portière conforme à la revendication 1, **caractérisée en ce que** chaque panneau (1, 2) porte une vitre (13, 14) coulissante entre une position de fermeture et d'ouverture, les bords verticaux adjacents (13a, 14a) des deux vitres (13, 14) étant sensiblement jointifs en position de fermeture.

4. Portière conforme à l'une des revendications 1 à 3, cette portière comportant un cadre (35), **caractérisée en ce qu'**elle est équipée d'au moins deux verrous (15, 16) situés à proximité de la jonction entre les deux panneaux (1, 2) aptes à verrouiller ceux-ci, respectivement au bord inférieur (17) et au bord supérieur (18) de la carrosserie (3) et d'au moins un verrou (19) pour verrouiller le bord arrière (20) du panneau arrière (2) à la carrosserie (3), les verrous (15, 16, 19) étant commandés par un moteur (34), ou par une commande manuelle.

5. Portière conforme à l'une des revendications 1 à 3, cette portière ne comportant pas de cadre **caractérisée en ce qu'**elle est équipée de verrous(35, 36) pour verrouiller les bords adjacents des deux panneaux (1, 2) et de verrous (37, 38) pour verrouiller le panneau arrière (2) au bord de la carrosserie (3), l'ensemble étant commandé par un moteur (39) et des tringles (21).

6. Portière conforme à la revendication 4, **caractérisée en ce qu'**elle présente une longueur suffisante pour équiper un véhicule automobile ayant deux sièges avant (30) et deux sièges arrière ou une blanquette arrière (31) pour permettre l'accès à l'arrière sans qu'il soit nécessaire de basculer vers l'avant les sièges avant (30).

## Claims

1. A side door for a vehicle including a front panel (1) and a rear panel (2), the front panel (1) being attached in a hinged way to the body (3) of the vehicle along a first vertical swivel pin (4) and the rear panel (2) being connected to the front panel (1) by a second vertical swivel pin (5), the two panels (1, 2) further being connected to one another via means for guiding the displacement of the two panels (1, 2) between a closed position in which the two panels (1, 2) are located in line with one another and an open position in which the front panel (1) has a larger maximum opening angle than the maximum opening angle of the rear panel (2), said latter angle being sufficient to allow a person to access the interior of the vehicle, said means for guiding the displacement of the two panels (1, 2) including:
- said second vertical swivel pin (5) and a third vertical swivel pin (6), the two pins (5, 6) being secured to the edge of the rear panel (2) adjacent to the front panel (1);
- the first vertical swivel pin (4) being secured to the edge of the front panel (1) adjacent to the body (3), being connected to the second pin (5) and being connected to a fourth vertical swivel pin (7);
- the fourth pin (7) being free in relation to the front panel (1), being attached in relation to the body (3) of the vehicle and being connected by a rod (8) to the third pin (6);
- the four above-mentioned pins (4, 5, 6, 7) forming a deformable quadrilateral;
said door being **characterised in that** the two adjacent edges (9, 10) of the two panels (1, 2) define between them, in closed position, a V-shaped section space (11) flared towards the interior of the vehicle, said space (11) being reduced to a slot (11a) with substantially parallel edges when the two panels (1, 2) are in maximum open position.

2. A door according to claim 1, **characterised in that** the opening of the door is assisted by an actuator (12) or motor.

3. A door according to claim 1, **characterised in that** each panel (1, 2) supports a window (13, 14) sliding between a closed and open position, the adjacent vertical edges (13a, 14a) of the two windows (13, 14) being substantially abutted in closed position.

4. A door according to one of claims 1 to 3, said door comprising a frame (35), **characterised in that** it is equipped with at least two locks (15, 16) located close to the joint between the two panels (1, 2) suitable for locking the latter, respectively at the lower edge (17) and at the upper edge (18) of the body (3) and of at least one lock (19) for locking the rear edge (20) of the rear panel (2) to the body (3), the locks (15, 16, 19) being controlled by a motor (34), or by a manual control.

5. A door according to one of claims 1 to 3, said door not comprising a frame, **characterised in that** it is equipped with locks (35, 36) for locking the adjacent edges of the two panels (1, 2) and locks (37, 38) for locking the rear panel (2) to the edge of the body (3), the assembly being controlled by a motor (39) and links (21).

6. A door according to claim 4, **characterised in that** it is long enough to equip a motor vehicle having two front seats (30) and two rear seats or a rear bench (31) for allowing access to the rear without it being necessary to tip the front seats forward (30).

## Patentansprüche

1. Seitliche Wagentür für ein Fahrzeug, die eine Vorderwand (1) und eine hintere Wand (2) umfaßt, wobei die Vorderwand (1) gelenkig mit einer ersten vertikalen Schwenkachse (4) an der Karosserie des Fahrzeugs befestigt ist und die hintere Wand (2) mit einer zweiten vertikalen Schwenkachse (5) mit der Vorderwand (1) verbunden ist, wobei die beiden Wände (1, 2) außerdem miteinander mit Mitteln zur Führung der beiden Wände (1, 2) zwischen einer Verschlußposition, in der sich die beiden Wände (1, 2) jeweils in der Verlängerung der anderen befinden, verbunden sind, und eine Öffnungsposition, in der die Vorderwand (1) einen größeren maximalen Öffnungswinkel als der maximale Öffnungswinkel der hinteren Wand (2) aufweist, wobei letzterer Winkel ausreicht, damit eine Person in das Fahrzeug einsteigen kann, wobei die besagten Mittel zur Führung der beiden Wände (1, 2) umfassen:
- die besagte zweite vertikale Schwenkachse (5) und eine dritte vertikale Schwenkachse (6), wobei die beiden Achsen (5, 6) mit der Kante der an die Vorderwand (1) anschließenden hinteren Wand (2) fest verbunden sind;
- wobei die erste vertikale Schwenkachse (4) mit der Kante der an die Karosserie (3) anschließenden Vorderwand (1) fest verbunden ist, mit der zweiten Achse (5) verbunden ist und mit einer vierten vertikalen Schwenkachse (7) verbunden ist;
- wobei die vierte Achse (7) im Verhältnis zur Vorderwand (1) frei ist, die im Verhältnis zur Karosserie (3) des Fahrzeugs feststeht und mit einem Schwingarm (8) mit der dritten Achse (6) verbunden ist;
- wobei die obigen vier Achsen (4, 5, 6, 7) ein verformbares Trapezoid bilden;
Wobei die besagte Tür **dadurch gekennzeichnet ist, daß** die beiden anschließenden Kanten (9, 10) der beiden Wände (1, 2) untereinander in Verschlußposition einen Raum (11) mit Querschnitt in aufgeweiterter V-Form zum Innern des Fahrzeugs beschreiben, wobei dieser Raum (11) auf einen Schlitz (11a) mit deutlich parallelen Kanten reduziert wird, wenn die beiden Wände (1, 2) in Position der maximalen Öffnung sind.

2. Wagentür nach Anspruch 1, **dadurch gekennzeichnet, daß** die Öffnung der Wagentür durch einen Zylinder (12) oder einen Motor unterstützt wird.

3. Wagentür nach Anspruch 1, **dadurch gekennzeichnet, daß** jede Wand (1, 2) eine Scheibe (13, 14) trägt, die sich zwischen der Verschluß- und der Öffnungsposition verschiebt, wobei die anschließenden vertikalen Kanten (13a, 14a) der beiden Scheiben (13, 14) in Verschlußposition deutlich aneinanderstoßen.

4. Wagentür nach einem beliebigen der vorstehenden Ansprüche 1 bis 3, da diese Wagentür einen Rahmen (35) trägt, **dadurch gekennzeichnet, daß** sie mit mindestens zwei Riegeln (15, 16) in der Nähe des Stoßes zwischen den beiden Wänden (1, 2) ausgerüstet ist, die diese verriegeln können, beziehungsweise an der unteren Kante (17) und der oberen Kante (18) der Karosserie (3), und mindestens einem Riegel (19) zum Verriegeln der hinteren Kante (20) der hinteren Wand (2) an der Karosserie (3), wobei die beiden Riegel (15, 16, 19) von einem Motor (34) oder mit einer manuellen Bedienung gesteuert werden.

5. Wagentür nach einem beliebigen der vorstehenden Ansprüche 1 bis 3, da diese Wagentür keinen Rahmen trägt, **dadurch gekennzeichnet, daß** sie mit Riegeln (35, 36) zum Verriegeln der anschließenden Kanten der beiden Wände (1, 2) ausgerüstet ist und mit Riegeln (37, 38) zum Verriegeln der hinteren Wand (2) an der Kante der Karosserie (3), wobei das ganze von einem Motor (39) und Stangen gesteuert wird.

6. Wagentür nach Anspruch 4, **dadurch gekennzeichnet, daß** sie eine ausreichende Länge für die Ausrüstung eines Fahrzeugs aufweist, das zwei Vordersitze (30) und zwei Rücksitze oder eine Rückbank (31) hat, damit der Zugang hinten möglich ist, ohne daß es notwendig wäre, die Vordersitze (30) nach vorne zu klappen.
